# EUROPEAN PATENT SPECIFICATION

(11) **EP 3 808 190 B1**
(45) Date of publication and mention of the grant of the patent: **01.05.2024**
(21) Application number: 20214587.6
(22) Date of filing: 30.12.2016
(51) Int. Cl.: A23L 2/60, A23L 27/30, A23L 2/54

(54) **COMPOSITIONS, IN PARTICULAR SWEETENING COMPOSITIONS**
ZUSAMMENSETZUNGEN, INSBESONDERE ZUSAMMENSETZUNGEN ZUM SÜSSEN
COMPOSITIONS, EN PARTICULIER COMPOSITIONS ÉDULCORANTES

(43) Date of publication of application: 21.04.2021
(62) Divisional of application: 16207626.9
(73) Proprietor: Red Bull GmbH, 5330 Fuschl am See (AT)
(72) Inventor: Nachbagauer, Josef, Fuschl am See 5330 (AT); Urban-Klik, Manfred, Fuschl am See 5330 (AT); Boehringer, Volker, Fuschl am See 5330 (AT)
(74) Representative: Metten, Karl-Heinz

(56) References cited:
- EP-A1- 2 486 806
- EP-A1- 3 017 708
- WO-A1-2012/177727
- WO-A1-2013/060746
- WO-A2-2010/014813
- AU-A1- 2011 203 233
- DATABASE GNPD [Online] MINTEL; 5 April 2004 (2004-04-05), anonymous: "Feine Süsse Vanilla Sweetener", XP055781638, Database accession no. 264684
- DATABASE GNPD [Online] MINTEL; 17 January 2013 (2013-01-17), anonymous: "Granulated Sweetener", XP055781641, Database accession no. 1971449
- DATABASE GNPD [Online] MINTEL; 1 October 2015 (2015-10-01), anonymous: "Natural Sweetener with Stevia Extract and Thaumatin", XP055781643, Database accession no. 3464687
- DATABASE GNPD [Online] MINTEL; 6 October 2015 (2015-10-06), anonymous: "Low Calorie Sugar with Stevia Extract", XP055781644, Database accession no. 3490401

## Description

The present invention relates to sweetening compositions, their use for the preparation of sweetening syrups and beverages as well as to beverages and the preparation of said beverages.

Common soft drinks usually contain significant amounts of natural sugars such as sucrose, glucose, fructose or mixtures thereof. The caloric content of these natural sugars usually is in the range from 3.6 to 3.9 kcal/g. Many attempts have been made to reduce the caloric content of beverages such as soft drinks. In some instances natural sugars have been replaced by steviol glycosides. Some steviol glycosides have a sweetening power which is about 240 to 400 times that of natural sugar sucrose. Steviol glycosides are derived from extracts of the leaves of the stevia plant (*Stevia rebaudiana Bertoni*). The four major steviol glycosides found in the leaves of the stevia plant are stevioside (about 5 to 10 wt-%), rebaudioside A (about 2 to 4 wt-%), rebaudioside C (about 1 to 2 wt-%) and dulcoside A (about 0.5 to 1 wt-%). Further steviol glycosides which are found in the extract of the leaves of the stevia plant, however in rather minute quantities, are rebaudioside B, rebaudioside D and rebaudioside E. The common aglycon of all steviol glycosides is steviol which belongs to the class of diterpenes.

Unfortunately, beverages sweetened with steviol glycosides suffer some drawbacks which for many consumers outway the caloric content of conventional beverages. Steviol glycosides are known to cause a bitter and/or licorice-like aftertaste, in some instances also a metallic aftertaste. In addition, the sweet sensation is retarded to some extent, that is, the sweetening exhibit a so-called lingering. In some cases steviol glycosides are also responsible for a blunt or dry mouthfeel.

In EP 2 519 118 sweetening compositions are disclosed containing a sweetener and at least one sweetness enhancer chosen from terpenes, flavonoids, amino acids, proteins, polyols, other known natural sweeteners, seco-dammarane glycosides, and analogues thereof. Suitable sweetening enhancer are reported to include stevia sweeteners, such as stevioside, steviolbioside, rebaudioside A, rebaudioside B, rebaudioside C, rebaudioside D, rebaudioside F, and dulcoside A. The at least one sweetness enhancer has to be present in the composition in an amount at or below the sweetness detection threshold level of the at least one sweetness enhancer, and the at least one sweetener and the at least one sweetness enhancer are different.

In EP 2 386 211 the use of rubusoside for masking, reducing or suppressing a bitter, sour and/or astringent taste impression of a bitter, sour and/or astringent-tasting substance is described. Compositions containing rubusoside shall mask, reduce or suppress in food products and in pharmaceuticals the bitter, sour and/or astringent taste impression of compounds such as steviosides and rebaudioside A.

And, WO 2008/049256 addresses a sweetened consumable comprising a) at least 0.0001 % of at least one sweetener, wherein said sweetener includes sucrose, fructose, glucose, high fructose corn syrup, corn syrup, xylose, arabinose, rhamnose, erythritol, xylitol, mannitol, sorbitol, inositol, acesulfame potassium, aspartame, neotame, sucralose, saccharine, or combinations thereof, wherein said at least one sweetener or sweetener combination is present in a concentration above the sweetness detection threshold in a concentration of at least isosweet to 2% sucrose, and b) at least one sweetness enhancer selected from the group consisting of naringin dihydrochalcone, mogroside V, swingle extract, rubusoside, rubus extract, stevioside, and rebaudioside A. Each sweetness enhancer shall be present in a concentration near its sweetness detection threshold. For naringin dihydrochalcone this concentration shall be from 2 to 60 ppm, for rubusoside from 1.4 ppm to 56 ppm, for rubus extract from 2 ppm to 80 ppm, for mogroside V from 0.4 ppm to 12.5 ppm, for swingle extract from 2 to 60 ppm, for stevioside from 2 to 60 ppm, and for rebaudioside A from 1 to 30 ppm.

Also many other attempts have been made to overcome the afore-mentioned shortcomings of steviol glycoside sweeteners such as a bitter and/or licorice-like aftertaste, a blunt or dry mouthfeel and/or a sweet aftertaste.

For example, according to WO 2012/073121 A2 the bitter aftertaste of steviol glycosides shall be decreased or eliminated by the reduction or elimination of rebaudioside C or dulcoside A or both from stevia compositions. However, it has been found that the reduction of rebaudioside C and/or dulcoside A as such does not guarantee a reduction in bitter aftertaste. Moreover, even with stevia compositions being void of rebaudioside C or dulcoside A consumers experience a slow onset and sometimes even a longer duration of the sweetness sensation.

In WO 2008/ 147726 it is described that a more sugar-like flavor profile shall be obtained by sweetener compositions comprising at least a) one sweetness enhancer such as urea or thiourea, b) at least one sweetener comprising a carbohydrate sweetener, a natural high-potency sweetener, a synthetic high-potency sweetener or a combination thereof such as rebaudioside compounds, sucralose, aspartame or acesulfame potassium, and c) at least one sweet taste improving composition selected from the group consisting of carbohydrates, polyols, amino acids, or mixtures thereof.

New sweetened beverage formulations which do not exhibit a bitter aftertaste shall be obtained according to EP 2 474 240 A1 by use of rebaudioside D and an acidulant comprising at least lactic acid and one or both of tartaric acid and citric acid, and no phosphoric acid.

From WO 2011/146463 A2 it can be derived that the bitterness in an otherwise sweet composition containing steviol glycosides shall be masked by incorporating an increased amount, relative to naturally occurring compositions, of rebaudioside D.

EP 2 486 806 A1 discloses a low-calorie orange juice drink which makes use of a mixture of 84 wt-% rebaudioside A and 16 wt-% rebaudioside D. Different from a low-calorie orange juice having been sweetened with a conventional stevia extract a pleasant taste similar to sucrose, a full mouthfeel, and no bitterness and no aftertaste shall be observed during sensory evaluation. A similar outcome was reported for a zero-calorie carbonated beverage.

According to WO 2008/ 112967 A1 the metallic aftertaste experienced with beverages containing conventional steviol glycosides shall be masked by the presence of anisic acid.

And, in WO 2012/109585 A1 it is disclosed that attributes such as bitterness, sweet aftertaste and licorice flavor of steviol glycosides may be overcome by sweetening compositions comprising a blend of rebaudioside A, rebaudioside B and steviol glycosides, in particular when the ratio of rebaudioside B to total steviol glycosides in the blend ranges from 0.5 % to about 50 % and more preferably from about 5 % to about 40 %.

WO 2010/ 014813 A2 addresses a composition comprising a plurality of solid particles, each particle comprising a sweetness enhancer, wherein the sweetness enhancer is 5-(neopentyloxy)-1H-benzo[c][1,2,6]thiadiazin-4-amino-2,2-dioxide or 3-(4-amino-2,2-dioxide-1H-benzo[c][1,2,6]thiadiazin-5-yloxy)-2',2'-dimethyl-N-propylpropanamide, or salts and/or solvates thereof. With the composition of WO 2010/014813 A2 improved compositions comprising sweetness enhancers, as well as methods for preparing such compositions shall be available.

AU 2011/203233 A1 is about a beverage composition comprising monatin or salt thereof. An amount of this composition shall contain less calories and carbohydrates than the same amount of the beverage composition containing sucrose or high fructose corn syrup in place of the monatin or salt thereof at comparable sweetness. The composition of AU 2011/203233 A1 shall exhibit less unpleasant off-flavors and less-than-desirable sweetness profiles.

WO 2012/ 177727 A1 discloses a sweet ingestible composition comprising Reb B and at least one sweetener, selected from the group consisting of steviol glycosides, stevia extracts, natural sweeteners, glycosylated terpenoid sweeteners, synthetic high intensity sweeteners, oligosaccharides, caloric sweeteners, and combinations thereof. The compositions of WO 2012/ 177727 A1 shall provide a simple and efficient way for food grade Reb B preparations suitable for food applications.

WO 2013/060746 A1 describes a mixture consisting essentially of the individual ingredients stevioside and rebaudioside A in a stevioside to rebaudioside A ratio of about 1 :1 to about 4:1. Said mixtures although being relatively rich in stevioside and relatively poor in rebaudioside A shall enhance sweetness of sweetened compositions in a way that is substantially similar to or even better than pure rebaudioside A.

EP 3 017 708 A1 is about a sweetening composition comprising rebaudioside A, rebaudioside B and rebaudioside D wherein, based on the total weight of rebaudioside A, rebaudioside B and rebaudioside D, rebaudioside A is present in an amount in the range from 80.0 to 99.0 wt-%, rebaudioside B is present in an amount in the range from 0.1 to 1.5 wt-%, and rebaudioside D is present in an amount in the range from 0.9 to 18.5 wt-%. By use of these sweetening compositions low-calorie beverages shall be provided which do not suffer from a bitter or licorice-like aftertaste and/or which do not cause a blunt or dry mouthfeel and/or which do not exhibit a delayed onset of the sensation of sweetness.

Sucrose being the standard natural sweetener has a characteristic time and intensity sweetness profile. Whereas some artificial sweeteners have a more rapid onset of sweetness than sucrose, most artificial sweeteners such as stevia compounds have not only a significantly slower onset but also exhibit a significantly longer linger than sucrose. The afore-mentioned drawbacks associated with the use of steviol glycosides are still not overcome to a satisfactory extent. It is therefore desirable to obtain beverages, which contain less or no natural sweeteners, and which have a much improved sweetness and aroma profile.

Accordingly, there still is a need to provide low-calorie beverages which do not exhibit a delayed onset of the sensation of sweetness and which, optionally, also do not suffer from a bitter or licorice-like aftertaste and/or which do not cause a blunt or dry mouthfeel. Hence, it has been a major goal of the present invention to attain a temporal sweetening profile similar or even essentially identical to that of natural sugar, i.e. a natural sweetening profile, in particular with respect to both the onset of sweetness and its lingering time.

The problem underlying the present invention has surprisingly been solved by a sweetening composition according to the features of claim 1.

Enzyme-treated steviol glycosides include those steviol glycosides having been treated with, for example, cyclomaltodextrin glucanotransferase (CGTase).

Rubusoside (CAS No: 64849-39-4) can be found in leaves of Rubus suavissimus S. Lee (Chinese sweet leaf). Rubusosides in the meaning of the present invention shall also comprise enzymatically-treated rubusosides.

Steviolglycosides such as rebaudioside A, rebaudioside B, rebaudioside D, rebaudioside C, rebaudioside E, rebaudioside F, stevioside, dulcoside, rubusoside and steviolbioside can be detected and determined according to HPLC-UV as specified in JECFA (2010) Steviol Glycosides, FAO JECFA Monograph 10, FAO, Rome.

Among the compounds of component c) of the sweetening composition of the present invention rubusoside and/or at least one rubusoside derivative are preferred, rubusoside being particularly preferred.

Said sweetening compositions of the present invention are particularly preferred which comprise a) 0,5 to 30 g/l of a natural sweet-tasting carbohydrate selected from the group consisting of natural sweet-tasting monosaccharides, b) 70 to 110 g/l of a natural sweet-tasting carbohydrate selected from the group consisting of natural sweet-tasting disaccharides, and c) 40 to 220 mg/l rubusoside and/or at least one rubusoside derivative or 0,1 mg/l to 15 mg/l and preferably 1,0 to 10 mg/l neohesperidin.

While said the sweet-tasting natural monosaccharide preferably is selected from the group consisting of fructose, glucose, mannose, rhamnose, xylose, tagatose, galactose, and mixtures thereof, said sweet-tasting natural disaccharide is preferably selected from the group consisting of sucrose, lactose, maltose and mixtures thereof.

With the sweetening compositions of the present invention it is particularly preferred to make use of sucrose as the sweet-tasting natural disaccharide.

The sweetening compositions of the present invention can further comprise at least one flavoring ingredient selected from the group consisting of galangal, cocoa, cinnamon, lemon, lemon juice concentrate, coca leaf, orange, orange oil, corn mint, pine, cardamom, mace, clove, lime, lime oil, nutmeg, nutmeg oil, mustard seeds, mustard seed oil, caramel, rosemary, pepper, honey, ginger, vanilla, licorice, licorice extract, cola nut and cola nut extract or mixtures thereof.

In a particularly preferred embodiment the sweetening compositions of the present invention further comprise taurine and/or caffeine. Accordingly, the sweetening compositions of the present invention can be used for sweetening beverages, in particular soft drinks or energy drinks.

Interestingly, the sweetening compositions of the present invention are also suited to prepare precursor compositions in the form of a syrup which can be easily stored and transported and can be used on demand for the preparation of in particular carbonated beverages.

The problem underlying the present invention has also been solved by a beverage comprising a sweetening composition according to the present invention. Here, the sweetening composition according to the present invention can already as such represent an aqueous composition, in particular a beverage. To the aqueous sweetening composition according to the present invention still further ingredients such as flavors or thickening agents may be added to form, for example, a commercial beverage.

Suitable beverages according to preferred embodiments are characterized in that rebaudioside A, B and D in combination are present in the beverage in a concentration in the range from 0.01 to 1.0 g/l, preferably from 0.05 to 0.75 g/l and more preferably from 0.1 to 0.6 g/l (determined at ambient temperature and 1 bar).

Also those beverages according to the present invention are preferred in which the sweet-tasting natural carbohydrates and the sweet-tasting sugar alcohols are present in combination in the beverage in a concentration not above 40 g/l, preferably in the range from 5 g/l to 35 g/l and more preferably in the range from 10 g/l to 25 g/l (determined at ambient temperature and 1 bar). Ambient temperature in the meaning of the present invention shall mean room temperature, i.e. a temperature in the range from 20°C to 25°C.

The beverages of the present invention comprise, in particular carbonated, soft drinks and energy drinks. Suitable soft drinks also include cola-flavored soft drinks, wherein cola-flavored soft drinks also encompass cola-flavored-type soft drinks. Also these beverages, when being sweetened with the sweetening composition in accordance with the present invention, do not or do essentially not exhibit a slow onset of the sensation of sweetness but provide a rather harmonic sweetening profile and do not or do essentially not have a bitter or licorice-like aftertaste.

It is another benefit of sweetening compositions of the present invention that beverages can be obtained which, if at all, contain natural sugars such as sweet-tasting carbohydrates and/or sweet-tasting sugar alcohols in a very reduced amount.

The sweetening compositions of the present invention can also comprise, for example when used with energy drinks, further ingredients such as sodium citrate, glucoronolactone, inositol, at least one vitamin, e.g. niacin, pantothenic acid, vitamin B6, vitamin B12, riboflavin, caustic caramel, caustic sulfite caramel, ammonia caramel, sulfite ammonia caramel or ascorbic acid or mixtures thereof.

The sweetening composition of the present invention can be used for sweetening beverages, in particular soft drinks or energy drinks. The beneficial effects coming along with the use of the sweetening composition of the present invention can in particular also be accomplished with carbonated beverages.

The problem of the present invention has also been solved by a method comprising the steps of a) providing a sweetening composition according to the present invention, b) providing water and c) mixing components provided under a) and b). The process of the present invention particularly further comprises the step (step d)) of carbonating the beverage.

According to another embodiment, the process of the present invention can further comprise the step of adding at least one thickening agent, at least one sweet-tasting natural carbohydrate, at least one sweet-tasting sugar alcohol, at least one organic acid and/or at least one flavoring ingredient to the sweetening composition according to the present invention or to a mixture comprising water and one of said sweetening compositions of the present invention. The aforementioned components may also be added to water prior to mixing with any of said sweetening compositions of the present invention. Here, the definitions provided above for thickening agent, sweet-tasting natural carbohydrate, sweet-tasting sugar alcohol, organic acid and flavoring ingredient are applicable as well both in terms of general information and preferred embodiments.

Furthermore, it is also possible that the sweet-tasting natural carbohydrates and/or at least one sweet-tasting sugar alcohol are added to the mixture comprising water and the sweetening compositions of the present invention prior to and/or after the carbonating step, preferably prior to the carbonating step.

The sweetening compositions of the present invention as well as the beverages of the present invention, e.g. soft drinks or energy drinks, in one embodiment can also comprise common additives such as amino acids, coloring agents, bulking agents, modified starches, texturizers, preservatives, antioxidants, emulsifiers, stabilizers, gelling agents or arbitrary mixtures thereof.

With the present invention it has been surprisingly found that sweetening compositions are accessible which do not exhibit a slow onset in the sweetening sensation. As an additional effect it is also possible to arrive at such sweetening compositions which do not have a bitter aftertaste and/or which also do not have a metallic aftertaste. Moreover, it has surprisingly been found that with the sweetening compositions of the present invention an aroma or sweetening profile can be accomplished which resembles that of beverages having been sweetened with natural sugars, even with carbonated beverages. Furthermore, it has surprisingly been found that with at least one tannin, in particular tannic acid and/or tannic acid derivatives, being present in the compositions of the present invention the long-lasting sweetening sensations of artificial sweeteners as, for example, stevia compounds can be shortened furnishing a natural or an essential natural sweetening sensation, that is a sweetening profile regularly caused by known high caloric sugars.

It is, thus, possible with the sweetening composition of the present invention to prepare beverages, in particular carbonated beverages, such as soft drinks and energy drinks which though having a significantly reduced caloric content exhibit an improved sweetness and aroma profile and which in a preferred embodiment also do not differ significantly in their taste from conventional beverages having been sweetened with natural sugars and/or artificial sweeteners. This also includes that a sweetened sensation is perceived by the consumer already at the very beginning. In addition, with the sweetening composition of the present invention beverages can be obtained which do not have an insipid or blunt taste or mouthfeel.

In the meaning of the present invention artificial sweeteners shall comprise all sweeteners different from natural sweeteners such as natural monosaccharide and disaccharide sweeteners, e.g. glucose and sucrose.

The beverages of the present invention comprise, in particular carbonated, soft drinks and energy drinks. Suitable soft drinks also include cola-flavored soft drinks, wherein cola-flavored soft drinks also encompass cola-flavored-type soft drinks. Also these beverages, when being sweetened with the sweetening composition in accordance with the present invention, do not or do essentially not exhibit a slow onset of the sensation of sweetness but provide a rather harmonic sweetening profile and do not or do essentially not have a bitter or licorice-like aftertaste.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description and in the claims could be essential alone or in every combination for the realization of the invention in its different embodiments.

## Claims

1. A sweetening composition comprising
a) 0,1 to 30 g/l of a natural sweet-tasting monosaccharide,
b) 40 to 110 g/l of a natural sweet-tasting disaccharide,
c) 30 to 220 mg/l of rubusoside and/or at least one rubusoside derivative or 0,01 mg/l to 15 mg/l of neohesperidin or
1 to 500 mg/l of at least one enzyme-treated steviol glycoside or any mixture thereof and
water.

2. The sweetening composition according to claim 1 comprising c) 1,0 to 10 mg/l neohesperidin.

3. The sweetening composition according to claim 1 or 2, wherein
the sweet-tasting natural monosaccharide is selected from the group consisting of fructose, glucose, mannose, rhamnose, xylose, tagatose, galactose, and mixtures thereof, and/or
wherein the sweet-tasting natural disaccharide is selected from the group consisting of sucrose, lactose, maltose and mixtures thereof.

4. The sweetening composition according to any of the preceding claims, further comprising
at least one flavoring ingredient selected from the group consisting of galangal, cocoa, cinnamon, lemon, lemon juice concentrate, coca leaf, orange, orange oil, corn mint, pine, cardamom, mace, clove, time, lime oil, nutmeg, nutmeg oil, mustard seeds, mustard seed oil, caramel, rosemary, pepper, honey, ginger, vanilla, licorice, licorice extract, cola nut and cola nut extract or mixtures thereof, and/or further comprising taurine and/or caffeine.

5. Use of the sweetening composition according to any of the preceding claims for sweetening non-carbonated or carbonated beverages, in particular soft drinks or energy drinks, or as non-carbonated or carbonated beverages, in particular soft drinks or energy drinks.

6. Use of the sweetening composition according to any of claims 1 to 4 for preparing a syrup as a precursor in the preparation of an, in particular carbonated, beverage, in particular a soft drink or an energy drink.

7. Use of the sweetening composition according to any of claims 1 to 4 for preparing an, in particular carbonated, beverage.

8. Beverage, in particular carbonated beverage, comprising or consisting of the sweetening composition according to any claims 1 to 4.

9. Beverage according to claim 8, **characterized in that**
it is a soft drink, in particular a cola-flavored or cola-flavored-type soft drink, or an energy drink.

10. Beverage according to claim 8 or 9, wherein
rebaudioside A, B and D in combination are present in the beverage in a concentration in the range from 0.01 to 1.0 g/l, preferably from 0.05 to 0.75 g/l and more preferably from 0.1 to 0.6 g/l.

11. Process for preparing a beverage according to any of claims 8 to 10 comprising the steps of
a) providing a sweetening composition according to any of claims 1 to 4,
b) providing water and
c) mixing components provided under a) and b).

12. Process according to claim 11 further comprising the step (step d)) of carbonating the beverage.

## Patentansprüche

1. Süßungsmittelzusammensetzung, umfassend
a) 0,1 bis 30 g/l eines natürlichen süß schmeckenden Monosaccharids,
b) 40 bis 110 g/l eines natürlichen süß schmeckenden Disaccharids,
c) 30 bis 220 mg/l Rubusosid und/oder mindestens ein Rubusosidderivat oder 0,01 mg/l bis 15 mg/l Neohesperidin oder 1 bis 500 mg/l mindestens eines enzymbehandelten Steviolglycosids oder einer beliebigen Mischung davon und Wasser.

2. Süßungsmittelzusammensetzung nach Anspruch 1, umfassend c) 1,0 bis 10 mg/l Neohesperidin.

3. Süßungsmittelzusammensetzung nach Anspruch 1 oder 2, wobei
das süß schmeckende natürliche Monosaccharid ausgewählt ist aus der Gruppe bestehend aus Fructose, Glucose, Mannose, Rhamnose, Xylose, Tagatose, Galactose und Mischungen davon, und/oder
wobei das süß schmeckende natürliche Disaccharid ausgewählt ist aus der Gruppe bestehend aus Saccharose, Lactose, Maltose und Mischungen davon.

4. Süßungsmittelzusammensetzung nach einem der vorhergehenden Ansprüche, ferner umfassend
mindestens einen Gemschmacksstoff, ausgewählt aus der Gruppe bestehend aus Galangal, Kakao, Zimt, Zitrone, Zitronensaftkonzentrat, Kokablatt, Orange, Orangenöl, Maisminze, Pinien, Kardamom, Muskatus, Nelken, Zeit, Limettenöl, Muskatnuss, Muskatnussöl, Senfsamen, Senfsamenöl, Karamell, Rosmarin, Pfeffer, Honig, Ingwer, Vanille, Lakritze, Lakritzeextrakt, Columusnuss und Columusnussextrakt oder Mischungen davon, und/oder ferner umfassend Taurin und/oder Koffein.

5. Verwendung der Süßungsmittelzusammensetzung nach einem der vorhergehenden Ansprüche zum Süßen von nicht kohlensäurehaltigen oder kohlensäurehaltigen Getränken, insbesondere Softgdrinks oder Energydrinks, oder als nicht kohlensäurehaltige oder kohlensäurehaltige Getränke, insbesondere Softdrinks oder Energydrinks.

6. Verwendung der Süßungsmittelzusammensetzung nach einem der Ansprüche 1 bis 4 zur Herstellung eines Sirups als Vorstufe bei der Herstellung eines, insbesondere kohlensäurehaltigen, Getränks, insbesondere eines Softdrinks oder eines Energydrinks.

7. Verwendung der Süßungsmittelzusammensetzung nach einem der Ansprüche 1 bis 4 zur Herstellung eines, insbesondere kohlensäurehaltigen, Getränks.

8. Getränk, insbesondere kohlensäurehaltiges Getränk, umfassend oder bestehend aus der Süßungsmittelzusammensetzung nach einem der Ansprüche 1 bis 4.

9. Getränk nach Anspruch 8, **dadurch gekennzeichnet, dass**
es ein Softdrink, insbesondere ein Softdrink mit Colageschmack oder Softdrink mit Cola typischem Geschmack, oder ein Energydrink ist.

10. Getränk nach Anspruch 8 oder 9, wobei
Rebaudiosid A, B und D in Kombination in dem Getränk in einer Konzentration im Bereich von 0,01 bis 1,0 g/l, vorzugsweise von 0,05 bis 0,75 g/l und besonders bevorzugt von 0,1 bis 0,6 g/l vorliegen.

11. Verfahren zur Herstellung eines Getränks nach einem der Ansprüche 8 bis 10, umfassend die Schritte
a) Bereitstellen einer Süßungsmittelzusammensetzung nach einem der Ansprüche 1 bis 4,
b) Bereitstellen von Wasser und
c) Mischen der unter a) und b) bereitgestellten Komponenten.

12. Verfahren nach Anspruch 11, ferner umfassend den Schritt (Schritt d)) des Karbonisierens des Getränks.

## Revendications

1. Composition édulcorante comprenant
a) 0,1 à 30 g/l d'un monosaccharide naturel au goût sucré,
b) 40 à 110 g/l d'un disaccharide naturel au goût édulcoré,
c) 30 à 220 mg/l de rubusoside et/ou d'au moins un dérivé de rubusoside ou 0,01 mg/l à 15 mg/l de néohespéridine ou
1 à 500 mg/l d'au moins un glycoside de stéviol traité par une enzyme ou un mélange quelconque de ceux-ci et
de l'eau.

2. Composition édulcorante selon la revendication 1 comprenant c) 1,0 à 10 mg/l de néohespéridine.

3. Composition édulcorante selon la revendication 1 ou 2, dans laquelle
le monosaccharide naturel au goût édulcoré est choisi dans le groupe constitué par le fructose, le glucose, le mannose, le rhamnose, le xylose, le tagatose, le galactose, et des mélanges de ceux-ci, et/ou
dans laquelle le disaccharide naturel au goût édulcoré est choisi dans le groupe constitué par le saccharose, le lactose, le maltose et des mélanges de ceux-ci.

4. Composition édulcorante selon l'une quelconque des revendications précédentes, comprenant en outre
au moins un ingrédient aromatisant choisi dans le groupe constitué par le galangal, le cacao, la cannelle, le citron, le concentré de jus de citron, la feuille de coca, l'orange, l'huile d'orange, la menthe de maïs, le pin, la cardamome, la fleur muscade, le clou de girofle, l'huile de lime, la noix de muscade, l'huile de noix de muscade, les graines de moutarde, l'huile de graines de moutarde, le caramel, le romarin, le poivre, le miel, le gingembre, la vanille, la réglisse, l'extrait de réglisse, la noix de cola et l'extrait de noix de cola ou des mélanges de ceux-ci, et/ou comprenant en outre de la taurine et/ou de la caféine.

5. Utilisation de la composition édulcorante selon l'une quelconque des revendications précédentes pour édulcorer des boissons non gazeuses ou gazeuses, en particulier des boissons softs ou des boissons énergisantes, ou en tant que boissons non gazeuses ou gazeuses, en particulier des boissons softs ou des boissons énergisantes.

6. Utilisation de la composition édulcorante selon l'une quelconque des revendications 1 à 4 pour préparer un sirop en tant que précurseur dans la préparation d'une boisson, en particulier gazeuse, en particulier une boisson soft ou une boisson énergisante.

7. Utilisation de la composition édulcorante selon l'une quelconque des revendications 1 à 4 pour préparer une boisson, en particulier gazeuse.

8. Boisson, en particulier boisson gazeuse, comprenant ou constituée de la composition édulcorante selon l'une quelconque des revendications 1 à 4.

9. Boisson selon la revendication 8, **caractérisée en ce que**
il s'agit d'une boisson soft, en particulier d'une boisson soft aromatisée au cola ou de type aromatisé au cola, ou d'une boisson énergisante.

10. Boisson selon la revendication 8 ou 9, dans laquelle
le rébaudioside A, B et D en combinaison sont présents dans la boisson en une concentration dans la plage de 0,01 à 1,0 g/l, de préférence de 0,05 à 0,75 g/l et plus préférablement de 0,1 à 0,6 g/l.

11. Procédé de préparation d'une boisson selon l'une quelconque des revendications 8 à 10 comprenant les étapes de
a) fourniture d'une composition édulcorante selon l'une quelconque des revendications 1 à 4,
b) fourniture d'eau et
c) mélange des composants fournis en a) et b).

12. Procédé selon la revendication 11 comprenant en outre l'étape (étape d)) de carbonatation de la boisson.
